# EUROPÄISCHE PATENTANMELDUNG

(11) **EP 2 378 317 A1**
(43) Veröffentlichungstag der Anmeldung: **19.10.2011**
(21) Anmeldenummer: 11002821.4
(22) Anmeldetag: 05.04.2011
(51) Int. Cl.: G01V 8/12

(54) **Optischer Sensor**

(30) Priorität: 10.04.2010 DE 102010014557
(71) Anmelder: Leuze electronic GmbH + Co. KG, 73277 Owen/Teck (DE)
(72) Erfinder: Argast, Martin, 72584 Hülben (DE)
(74) Vertreter: Ruckh, Rainer Gerhard

(57) **Zusammenfassung**

Die Erfindung betrifft einen optischen Sensor (1) zur Erfassung von Objekten (6) in einem Überwachungsbereich und umfasst einen Lichtstrahlen empfangenen Empfänger (5) und eine Auswerteeinheit (8). In der Auswerteeinheit (8) wird in Abhängigkeit der Empfangssignale am Ausgang des Empfängers (5) ein Objektfeststellungssignal generiert. Von einer nicht zum optischen Sensor (1) gehörenden, einen Raum beleuchtenden Raumlichtquelle (2) wird emittiertes Wechsellicht auf den Empfänger (5) geführt. In Abhängigkeit der Menge des am Empfänger (5) registrierten Wechsellichts wird das Objektfeststellungssignal generiert.

## Beschreibung

Die Erfindung betrifft einen optischen Sensor gemäß dem Oberbegriff des Anspruchs 1.

Ein derartiger optischer Sensor weist neben einem Empfänger als aktivem optischen Sensorelement generell einen Sendelichtstrahlen emittierenden Sender als zweites aktives optisches Sensorelement auf. Ist der optische Sensor als Lichtschranke ausgebildet, sind der Sender und Empfänger an gegenüberliegenden Rändern eines Überwachungsbereichs, innerhalb dessen Objekte erfasst werden sollen, angeordnet. Dabei sind der Sender und Empfänger so angeordnet, dass bei freiem Überwachungsbereich vom Sender emittierte Sendelichtstrahlen direkt in den Empfänger eingestrahlt werden. Bei einem Objekteingriff in den Überwachungsbereich wird der Strahlengang der Sendelichtstrahlen unterbrochen, so dass die Sendelichtstrahlen nicht mehr zum Empfänger gelangen, was in der Auswerteeinheit, die dem Empfänger zugeordnet ist, registriert wird.

Nachteilig bei derartigen optischen Sensoren ist, dass diese mit einem Sender und einem Empfänger stets zwei aktive optische Sensorelemente benötigen, was einen beträchtlichen Kostenaufwand bedeutet. Auch ist dadurch ein erheblicher Energieaufwand bedingt, wobei insbesondere der Sender einen hohen Energiebedarf hat. Bei einem als Lichtschranke ausgebildeten optischen Sensor kommt als weiterer Nachteil hinzu, dass aufgrund der räumlich separaten Anordnung separate Versorgungsleitungen für den Sender und Empfänger vorgesehen werden müssen.

Die DE 10 2004 008 925 A1 betrifft einen optischen Sensor zur Erfassung von Objekten in einem Überwachungsbereich mit einem Empfänger, bestehend aus mindestens zwei Empfangslichtstrahlen empfangenden Empfangselementen, mit einem aus Kontrastelementen bestehenden, den Überwachungsbereich begrenzenden Kontrastmuster, wobei bei freiem Überwachungsbereich von Kontrastelementen mit ersten Reflexionskoeffizienten zurückreflektierte Empfangslichtstrahlen auf ein erstes Empfangselement treffen und von Kontrastelement mit zweiten Reflexionskoeffizienten zurückreflektierte Empfangslichtstrahlen auf das zweite Empfangselement treffen, und mit einer Auswerteeinheit, in welcher aus den Differenzen der Empfangssignale an den Ausgängen der Empfangselemente ein binäres Objektfeststellungssignal generiert wird, dessen Schaltzustände angeben, ob sich ein Objekt im Überwachungsbereich befindet oder nicht.

Dieser optische Sensor kann prinzipiell ohne einen Sender als zusätzliches Sensorelement betrieben werden. Dann wird zur Detektion des Kontrastmusters nur von diesem zurückreflektiertes Umgebungslicht ausgenutzt.

Nachteilig bei diesem optischen Sensor ist, dass zur Objektdetektion zwingend ein den Überwachungsbereich begrenzendes Kontrastmuster eingesetzt werden muss. Je nach Art des Umgebungslichts, insbesondere bei wechselnden Sonneneinstrahlungen, kann eine Erkennung des Kontrastmusters jedoch fehlschlagen, wodurch auch keine Objektdetektion mehr möglich ist. Weiterhin ist nachteilig, dass das Kontrastmuster sehr dicht vor dem Empfänger angeordnet sein muss, um dieses noch definiert erkennen zu können. Der nutzbare Überwachungsbereich ist dadurch unerwünscht eingeschränkt.

Der Erfindung liegt die Aufgabe zugrunde, einen optischen Sensor der eingangs genannten bereitzustellen, welcher bei geringem konstruktiven Aufwand eine hohe Funktionalität aufweist.

Zur Lösung dieser Aufgabe sind die Merkmale des Anspruchs 1 vorgesehen. Vorteilhafte Ausführungsformen und zweckmäßige Weiterbildungen der Erfindung sind in den Unteransprüchen beschrieben.

Die Erfindung betrifft einen optischen Sensor zur Erfassung von Objekten in einem Überwachungsbereich und umfasst einen Lichtstrahlen empfangenen Empfänger und eine Auswerteeinheit. In der Auswerteeinheit wird in Abhängigkeit der Empfangssignale am Ausgang des Empfängers ein Objektfeststellungssignal generiert. Von einer nicht zum optischen Sensor gehörenden, einen Raum beleuchtenden Raumlichtquelle wird emittiertes Wechsellicht auf den Empfänger geführt. In Abhängigkeit der Menge des am Empfänger registrierten Wechsellichts wird das Objektfeststellungssignal generiert.

Der Grundgedanke der Erfindung besteht somit darin, eine Raumlichtquelle, wie sie insbesondere in Fabrikhallen zur Raumbeleuchtung regelmäßig zum Einsatz kommt, als nicht zum optischen Sensor gehörende Komponente gezielt als Beleuchtungsquelle, das heißt als externe Sendereinheit zur Objektdetektion zu nutzen. Der optische Sensor braucht daher keinen eigenen Sender zur Emission von Sendelichtstrahlen aufweisen, wodurch der konstruktive Aufwand des optischen Sensors äußerst gering gehalten werden kann.

Ein wesentlicher Vorteil der Erfindung besteht darin, dass das von der Raumlichtquelle emittierte Wechsellicht kein diffuses Umgebungslicht darstellt. Vielmehr kann mit dem Wechsellicht gezielt ein definierter Strahlengang innerhalb eines Überwachungsbereichs hergestellt werden, um dort vorhandene Objekte zu detektieren.

Im einfachsten Fall kann hierzu das von der Raumlichtquelle emittierte Wechsellicht direkt genutzt werden, wobei dann der Empfänger des optischen Sensors geeignet relativ zur Raumlichtquelle zu positionieren ist.

Besonders vorteilhaft sind Umlenkmittel vorgesehen, die von der Raumlichtquelle emittiertes Wechsellicht so umlenken, dass dieses gezielt im Überwachungsbereich geführt wird.

Die Umlenkmittel können dabei derart ausgebildet sein, dass ein optischer Sensor in Form einer Lichtschranke oder eines Lichttasters realisiert wird. Besonders vorteilhaft wird mit den Umlenkmitteln dabei zusätzlich eine Strahlformung des Wechsellichts erzielt, so dass eine definierte Strahlbreite und ein definierter Öffnungswinkel des Wechsellichts erhalten werden.

Besonders vorteilhaft wird das Empfangssignal im Zeitbereich mit einer Abtastfrequenz abgetastet. Damit wird eine zuverlässige Detektion des Wechsellichts gewährleistet. Zweckmäßig erfolgt die Abtastung des Empfangssignals mit einem Analog-Digital-Wandler. Um stets einen hinzureichenden Signalpegel bei der Abtastung des Empfangssignals zu erhalten unterscheidet sich die Abtastfrequenz von der Frequenz des Wechsellichts. Bei einer dicht an der Abtastfrequenz liegenden Frequenz des Wechsellichts wird die Abtastfrequenz variiert.

Besonders vorteilhaft wird das mit der Abtastfrequenz abgetastete Empfangssignal über ein bestimmtes Zeitintervall aufsummiert. Das aufsummierte Empfangssignal wird zur Generierung des Objektfeststellungssignals mit einem Schwellwert bewertet. Dadurch wird eine besonders hohe Nachweissicherheit bei der Objektdetektion erhalten. Diese Nachweissicherheit kann dadurch noch erhöht werden, dass mittels eines Empfangsverstärkers auf dem Empfänger auftreffende Störlichtanteile in Form von Gleichlicht ausgefiltert werden.

Die Erfindung wird im Folgenden anhand der Zeichnungen erläutert. Es zeigen
- Figur 1:: Blockschaltbild des erfindungsgemäßen optischen Sensors (Grundprinzip)
- Figur 2a:: Verstärktes Empfangssignal des optischen Sensors gemäß Figur 1
- Figur 2b:: Abgetastetes Empfangssignal des optischen Sensors
- Figur 2c:: Abgetasteter Betrag des Empfangssignals

- Figur 3a:: Summenbildung des abgetasteten Betrags des Empfangssignals gemäß Figur 2
- Figur 3b:: Summenbildung des abgetasteten Empfangssignals gemäß Figur 2
- Figur 4a:: Verstärktes Empfangssignal mit höherer Frequenz als in Figur 2
- Figur 4b:: Abgetastetes Empfangssignal
- Figur 4c:: Abgetasteter Betrag des Empfangssignals
- Figur 5a:: Summenbildung des abgetasteten Betrags des Empfangssignals gemäß Figur 4
- Figur 5b:: Summenbildung des abgetasteten Empfangssignals gemäß Figur 4
- Figur 6:: Abtastsignal bei abgedecktem Empfänger des optischen Sensors
- Figur 7:: Zusammenstellung verschiedener Raumlichtquellen
- Figur 8:: Erste Ausführungsform des optischen Sensors
- Figur 9a bis c:: Zeitdiagramme der Objekterfassung für den optischen Sensor gemäß Figur 8
- Figur 10:: Zweite Ausführungsform des optischen Sensors
- Figur 11a bis c:: Zeitdiagramme der Objekterfassung für den optischen Sensor gemäß Figur 10

- Figur 12:: Dritte Ausführungsform des optischen Sensors
- Figur 13a bis d:: Zeitdiagramme der Objekterfassung für den optischen Sensor gemäß Figur 11
- Figur 14:: Vierte Ausführungsform des optischen Sensors
- Figur 15a bis c:: Zeitdiagramme der Objekterfassung für den optischen Sensor gemäß Figur 14
- Figur 16:: Fünfte Ausführungsform des optischen Sensors
- Figur 17:: Sechste Ausführungsform des optischen Sensors
- Figur 18:: Siebte Ausführungsform des optischen Sensors
- Figur 19:: Achte Ausführungsform des optischen Sensors

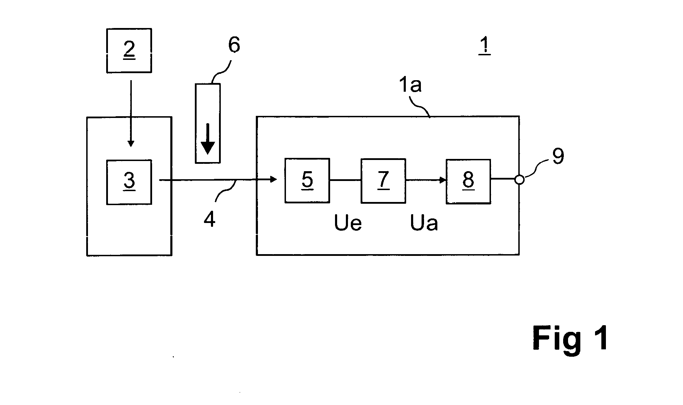

Figur 1 zeigt das Blockschaltbild einer Grundform des erfindungsgemäßen optischen Sensors 1. Von einer nicht zum optischen Sensor 1 gehörenden, einen Raum wie eine Halle beleuchtenden Raumlichtquelle 2 wird Wechsellicht emittiert. Eine zum optischen Sensor 1 gehörende Lichtumlenkeinheit 3 als Umlenkmittel, lenkt das von der Raumlichtquelle 2 abgegebene Wechsellicht als Empfangslichtstrahlen 4 durch den Überwachungsbereich zum Empfänger 5, um ein dort vorhandenes Objekt 6 detektieren zu können Das Empfangssignal Ue wird durch einen Empfangsverstärker 7 verstärkt und einer Auswerteeinheit 8 zugeführt, wo es zyklisch durch einen AD-Umwandler eingelesen wird. Der Empfänger 5, der Empfangsverstärker 7 und die Auswerteeinheit 8 befinden sich in einem Gehäuse 1a des optischen Sensors 1.

Überschreitet das verstärkte Empfangssignal Ua einen Schwellwert s1, wird am Schaltausgang 9 als Objektfeststellungssignal das Schaltsignal für "freie Strecke" ausgegeben. Das Objekt 6 unterbricht beim seitlichen Eintauchen den Empfangslichtstrahl 4, wodurch das verstärkte Empfangssignal unter den Schwellwert s1 sinkt und am Schaltausgang 9 "Objekt" 6 als Objektfeststellungssignal gemeldet wird.

Wesentlich ist, dass die Raumlichtquelle 2 eine herkömmliche Einheit zur Beleuchtung eines Raumes wie einer Fabrikhalle bildet und selbst nicht zum optischen Sensor 1 gehört. Das Licht der Raumlichtquelle 2 bildet daher ein externes System.

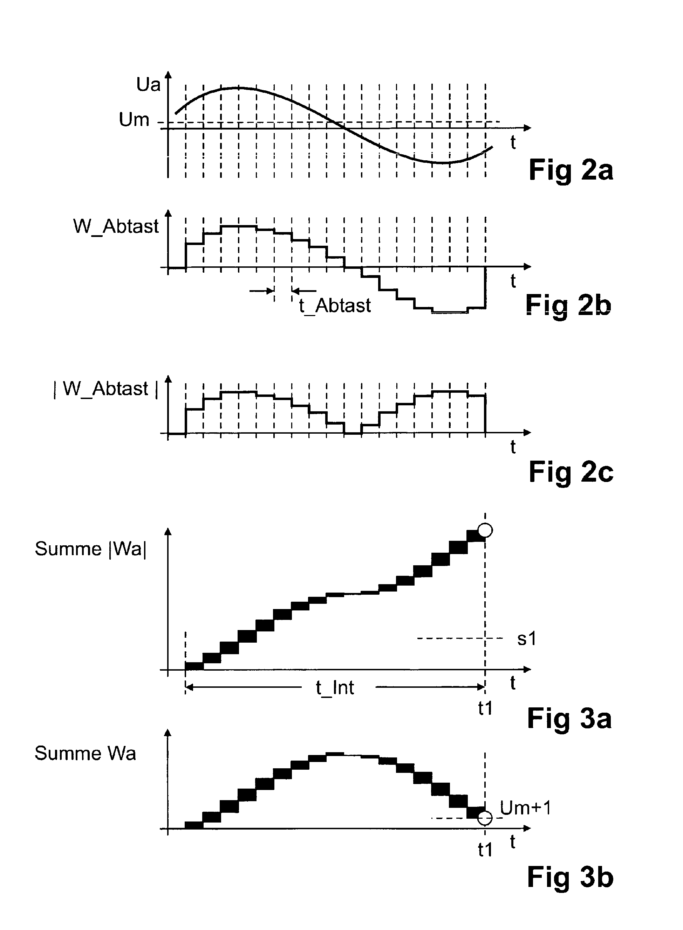

Figur 2a zeigt das verstärkte Empfangssignal Ua am Empfangsverstärker 7 des optischen Sensors 1 gemäß Figur 1. Die Gleichanteile sind durch einen Hochpass im Empfangsverstärker 7, der zum Beispiel durch einen Koppelkondensator mit dem nachfolgenden Lastwiderstand gebildet wird, abgetrennt.

Durch eine zeitliche Abtastung mit einem AD-Umsetzer (Analog-Digital-Wandler) der Auswerteeinheit 8 ergeben sich die Abtastwerte Wa, wie in Figur 2b gezeigt. Die Abtastung mit dem AD-Umsetzer erfolgt derart, dass die Empfangssignale von diesem in einem bestimmten Zeittakt in eine Rechnereinheit der Auswerteeinheit 8 eingelesen werden, wobei die Rechnereinheit den Zeittakt vorgibt. Der in Figur 2c dargestellte Betrag der Abtastwerte Wa wird, wie in Figur 3a gezeigt, in der Summe |Wa| über eine vorgegebene Zeit t_Int aufsummiert. Übersteigt der Endwert zum Zeitpunkt t1 den Schwellwert s1, ist eine "freie Strecke" des Überwachungsbereichs erkannt.

Figur 3b zeigt das aufsummierte Abtastsignal, das bei genügend langer Integrationszeit t_Int immer einen Wert in der Nähe von Null ergeben muss, da das Licht der Raumlichtquelle 2 Wechsellicht ist, das mit einer bestimmten Frequenz periodisch variiert. Koppelkondensatoren stellen Energiespeicher dar, die kurzzeitige Störungen, wie zum Beispiel Blitzlicht speichern und damit den Sensor länger als notwendig blockieren. Um auf einen zweiten Koppelkondensator verzichten zu können, muss der Gleichspannungsarbeitspunkt der an den AD-Umsetzer angeschlossenen Stufe bekannt sein. Der ermittelte Mittelwert Um+1 gibt diesen Gleichspannungarbeitspunkt wieder, der in der Auswertung berücksichtigt werden kann. Durch die permanente Erfassung des Mittelwertes Um+1 werden Drift durch Einschwingeffekte oder langsame Temperaturänderungen berücksichtigt.

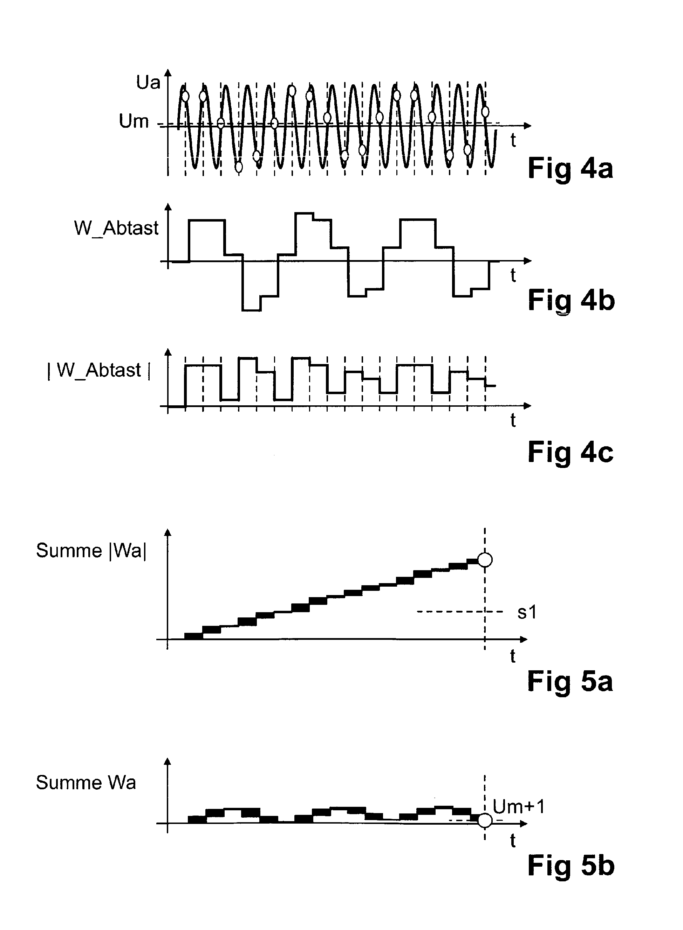

Figur 4a zeigt das verstärkte Empfangssignal einer Raumlichtquelle 2 mit höherer Modulationsfrequenz. Durch die zeitliche Abtastung ergeben sich sehr unterschiedliche Abtastwerte Wa, wie in Figur 4b gezeigt.

Figur 4c zeigt die zugehörige Betragsabweichung |Wa|, die als Betragsdifferenz der Abtastwerte Wa zum aktuellen Mittelwert Um gebildet wird.

Das Beispiel der Figuren 4a bis c zeigt, dass das Funktionsprinzip des optischen Sensors 1 unabhängig davon funktioniert, ob die Abtastfrequenz größer oder kleiner ist als die Frequenz der Raumlichtquelle 2. Wesentlich ist nur, dass beide Frequenzen nicht gleich sind, da dann die Möglichkeit besteht, dass bei "freier Strecke" der Abtastwert Null erhalten wird.

Liegt die Modulationsfrequenz, das heißt die Frequenz des Wechsellichts der Raumlichtquelle 2 nahe an der Abtastfrequenz, kann es zu Schwebungen in den Abtastwerten kommen, die eine kleine oder unregelmäßige Betragsdifferenz liefern. Dieses Problem kann dadurch umgangen werden, indem die Abtastfrequenz in einem ausreichenden Frequenzbereich variiert wird. Die Variation kann durch einen Zufallswert, zum Beispiel vom Divisionsrest eines Rauschwertes, abgeleitet werden.

Figur 5a zeigt die aufsummierte Summe |Wa|, deren Endwert deutlich über dem Schwellwert s1 liegt. Der Gleichspannungsarbeitspunkt kann auch hier wieder parallel zur Messung der Summe durch den Mittelwert Um+1 erfasst werden. Figur 5b zeigt den zugehörigen Verlauf der Abtastwerte Wa.

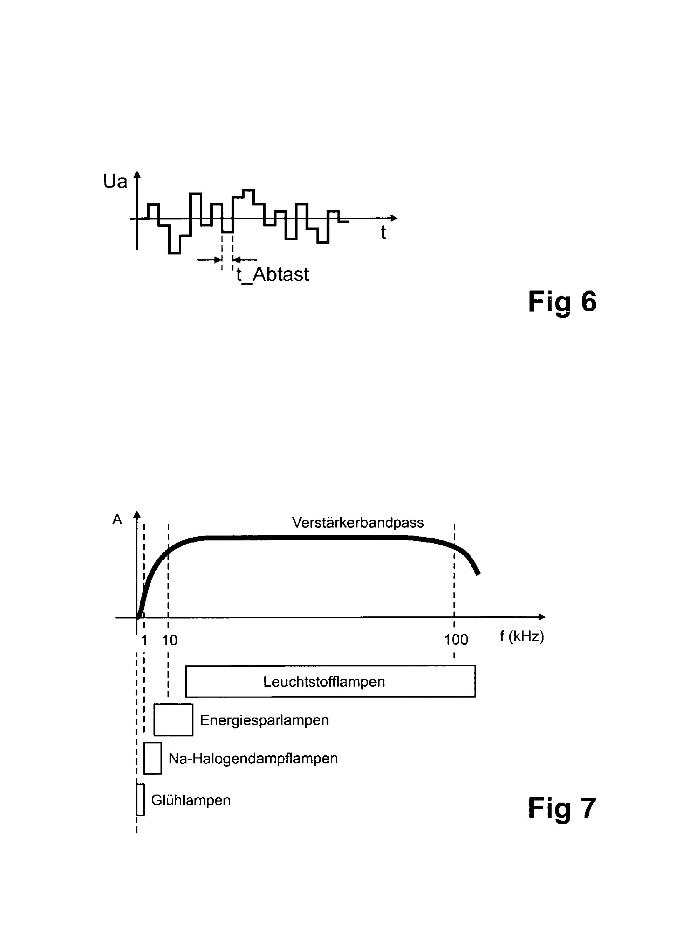

Figur 6 zeigt das Abtastsignal Wa bei abgedecktem Empfänger 5. Durch das thermische Rauschen im Arbeitswiderstand, das Eingangsrauschen des Verstärkers und Rauschen des Empfangselementes entsteht ein Abtastsignal, das aufsummiert einen Betrag ergibt, der unterhalb des Schwellwertes s1 bleiben muss. Dieser Wert bestimmt im Wesentlichen die Gesamtempfindlichkeit der Vorrichtung.

Figur 7 zeigt eine Zusammenstellung verschiedener Raumlichtquellen 2 bezüglich ihrem Modulationsspektrum. Glühlampen mit 100 Hz-Anteilen werden durch den Verstärkerbandpass weitgehend unterdrückt. Dagegen können alle wichtigen Industriebeleuchtungen genutzt werden da sie im Durchlassbereich des Verstärkerbandpasses liegen.

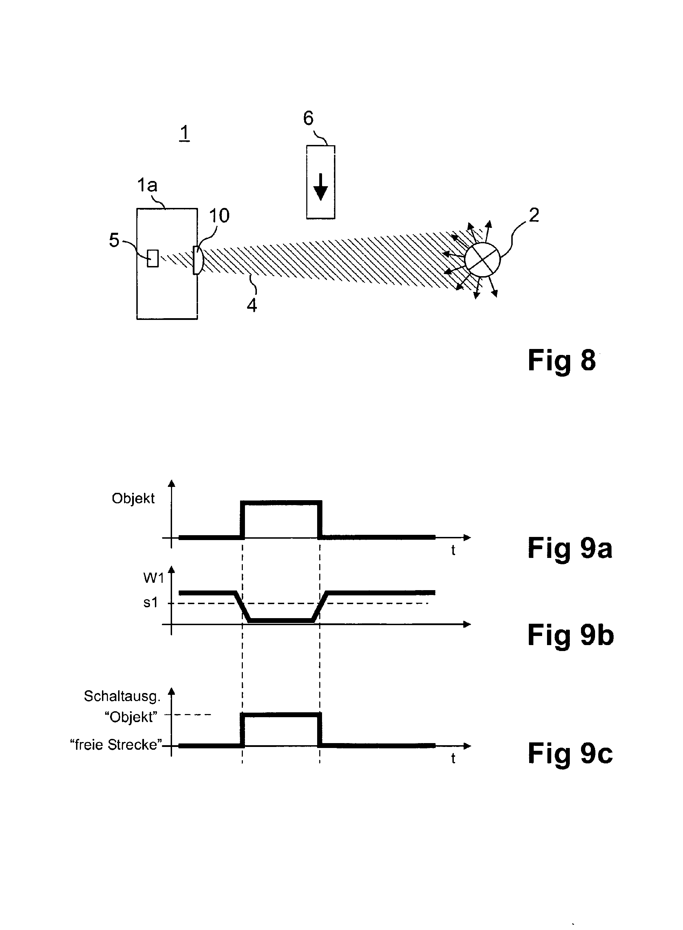

Figur 8 zeigt das einfachste Ausführungsbeispiel des optischen Sensors 1, welcher nach dem Lichtschrankenprinzip arbeitet und bei dem der Empfänger 5 direkt auf die Raumlichtquelle 2 gerichtet wird. In Figur 8 ist der optische Sensor 1 mit einem in einem Gehäuse 1a integrierten Empfänger 5 dargestellt. An der sich der Raumlichtquelle 2 zugewanden Frontwand des Gehäuses 1a, befindet sich eine Empfangsoptik 10, die das Wechsellicht der Raumlichtquelle 2 als Empfangslichtstrahlen 4 auf den Empfänger 5 fokussiert. Das seitlich eintauchende Objekt 6 unterbricht die über die Empfangsoptik 10 zum Empfänger 5 geführten Empfangslichtstrahlen 4 und wird dadurch erkannt.

Figur 9a zeigt die Verweildauer des Objektes 6 im Empfangslichtstrahl 4. Wie in Figur 9b gezeigt, unterschreitet der Abtastwert Wa in dieser Zeit den Schwellwert s1 und generiert damit das Schaltsignal "Objekt" 6 das heißt "Objekt 6 erkannt", das in Figur 9c gezeigt ist.

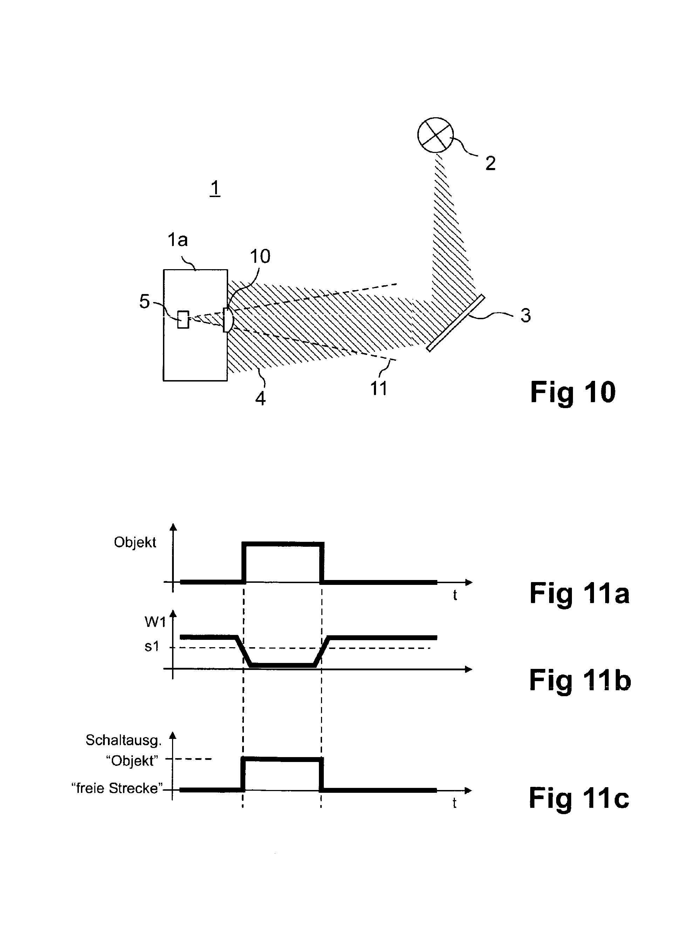

Figur 10 zeigt ein zweites Ausführungsbeispiel eines nach dem Lichtschrankenprinzip arbeitenden optischen Sensors 1. Der optische Sensor 1 umfasst als Umlenkmittel eine Lichtumlenkeinheit 3, durch die das Licht, das heißt Wechsellicht von der Raumlichtquelle 2, zum Empfänger 5 des optischen Sensors 1 gelangt. Durch die Lichtumlenkeinheit 3 wird der Überwachungsbereich definiert. Es werden nur Objekte 6 erkannt, die zwischen dem Gehäuse 1a des optischen Sensors 1 und der Lichtumlenkeinheit 3 eintauchen. Licht, das von der Raumlichtquelle 2 oder benachbarten Lichtquellen direkt auf den Empfänger 5 trifft, gelangt nicht zum Empfänger 5, da die Empfangsoptik 10 einen begrenzten Empfangsöffnungswinkel 11 vorgibt.

Die Figuren 11a bis c, die die Objektdetektion mit dem optischen Sensor 1 gemäß Figur 10 veranschaulichen, entsprechen den Figuren 9a bis c.

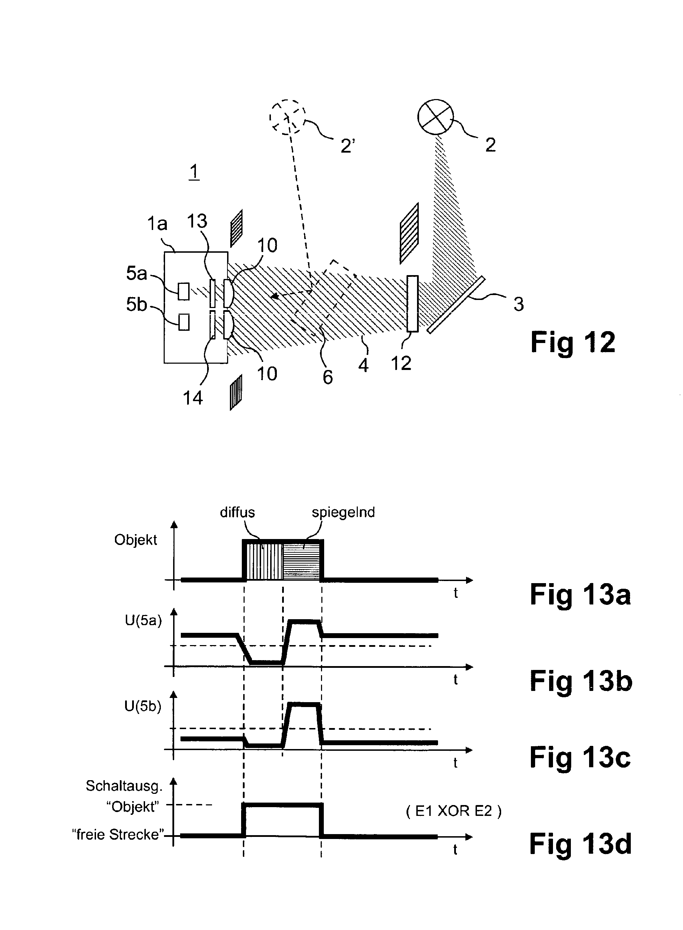

Figur 12 zeigt ein drittes Ausführungsbeispiel eines nach dem Lichtschrankenprinzip arbeitenden optischen Sensors 1 mit einer Lichtumlenkeinheit, 3 die Wechsellicht von einer Raumlichtquelle 2 zum Empfänger 5 des optischen Sensors 1 führt. Um spiegelnde Objekte 6, die Licht von anderen Lichtquellen 2' an der Lichtumlenkeinheit 3 vorbei zum Empfänger 5 führen könnten zu erkennen, wird eine Anordnung mit zwei Empfängern 5a und 5b verwendet. Vor der Lichtumlenkeinheit 3 wird ein Polarisationsfilter 12 in den Strahlengang des Empfangslichtes 4 eingefügt. Vor dem Empfänger 5a befindet sich ein Polarisationsfilter 13 mit der gleichen Orientierung, so dass das polarisierte Empfangslicht 4 zum Empfänger 5a durchgelassen wird. Dem Empfänger 5b ist ein Polarisationsfilter 14 vorgeschaltet, das um 90° zu dem Polarisationsfilter 13 gedreht angeordnet ist. Der Empfänger 5b erhält deshalb von der Lichtumlenkeinheit 3 kein Licht.

Figur 13a zeigt den Eingriff des Objektes 6, das zunächst diffus reflektiert und im zweiten Teil Licht der Lichtquelle 2'zum Empfänger 5 spiegelt.

Figur 13b zeigt den Signalverlauf des Empfängers 5a, der bei freier Strecke über dem Schwellwert s1 liegt.

Im Gegensatz dazu liegt der Pegel des Empfängers 5b, nach Figur 13c unterhalb des Schwellwertes s1.

Durch das Objekt 6 werden die Empfangslichtstrahlen 4 für beide Empfänger 5a, 5b unterbrochen. Durch den spiegelnden Objektteil erhalten beide Empfänger 5a, 5b viel unpolarisiertes Licht und beide Signalpegel überschreiten den Schwellwert s1. Sobald die Signalpegellage des Empfängers 5a zum Empfänger 5b nicht mehr unterschiedlich ist, wird das Objekt 6 erkannt und entsprechend Figur 13d ein Objektfeststellungssignal am Schaltausgang 9 ausgegeben.

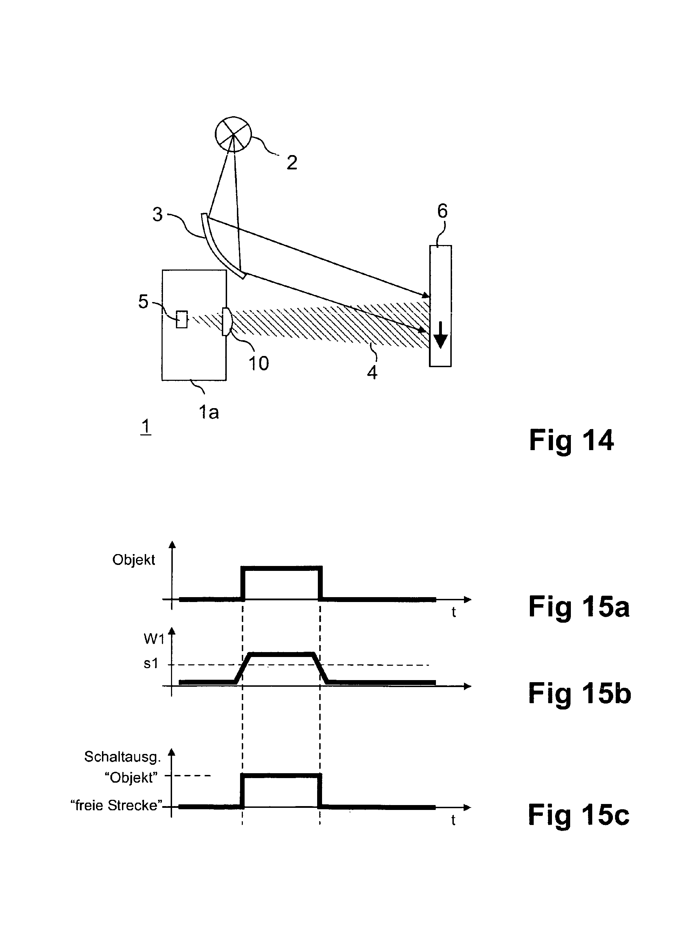

Figur 14 zeigt ein viertes Ausführungsbeispiel eines als energetischer Taster ausgebildeten optischen Sensors 1. Hier führt die Lichtumlenkeinheit 3 das Wechsellicht der Raumlichtquelle 2 nicht zum Empfänger 5 sondern in den Überwachungsbereich. Nur wenn dort ein Objekt 6 vorhanden ist, wird das Wechsellicht von diesem zum optischen Sensor 1 reflektiert. Die Lichtumlenkeinheit 3 wird auf der Seite des optischen Sensors 1 so angeordnet, dass das Licht der Raumlichtquelle 2 auf das Objekt 6 gerichtet wird. Damit entsteht ein Taster, der das Objekt 6 dadurch erkennt, dass Empfangslicht 4 vom Objekt 6 zum Empfänger 5 reflektiert wird. Da die Tastabstände zum Objekt 6 für diese Anordnung auf < 1m begrenzt bleiben, kann es vorteilhaft sein, die Lichtumlenkeinheit 3 als Parabolspiegel auszubilden, der das Licht der Lichtquelle 2 auf das Objekt 6 bündelt.

Figur 15a zeigt die Verweildauer des Objekts 6 im Überwachungsbereich. Die Figur 15b zeigt die Signalpegel bei eintauchendem Objekt 6. Entsprechend der Tasterfunktion überschreitet der Signalpegel den Schwellwert s1 bei vorhandenem Objekt 6. Das daraus generierte Objektfeststellungssignal ist in Figur 15c dargestellt.

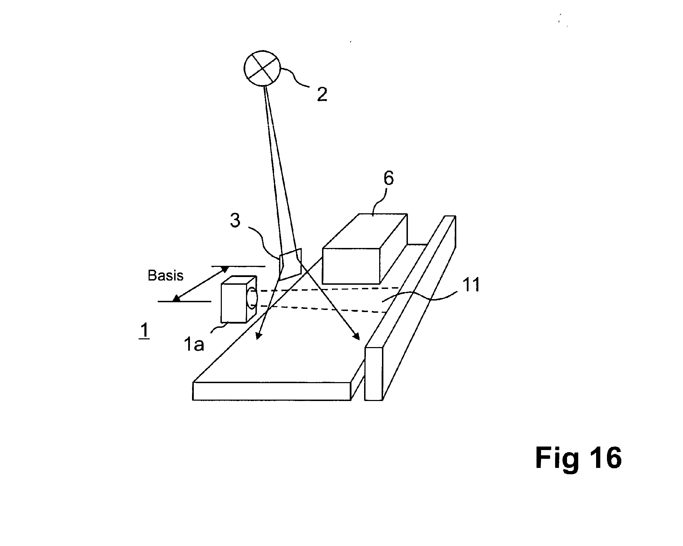

Figur 16 zeigt ein fünftes Ausführungsbeispiel eines optischen Sensors 1 in Form eines V-Tasters mit Hintergrundunterdrückung. Die Lichtumlenkeinheit 3 ist hier seitlich zum Gehäuse 1a des optischen Sensors 1 um einen Basisabstand versetzt angeordnet. Damit wird eine V-Tasteranordnung gebildet, bei der das Objekt 6 erkannt wird, wenn sich dieses im Empfangsöffnungswinkel 11 befindet und gleichzeitig von dem von der Lichtumlenkeinheit 3 umgelenkten Licht der Raumlichtquelle 2 getroffen wird. Der Vorteil dieser Anordnung ist, dass der Hintergrund nicht als Objekt 6 erkannt wird.

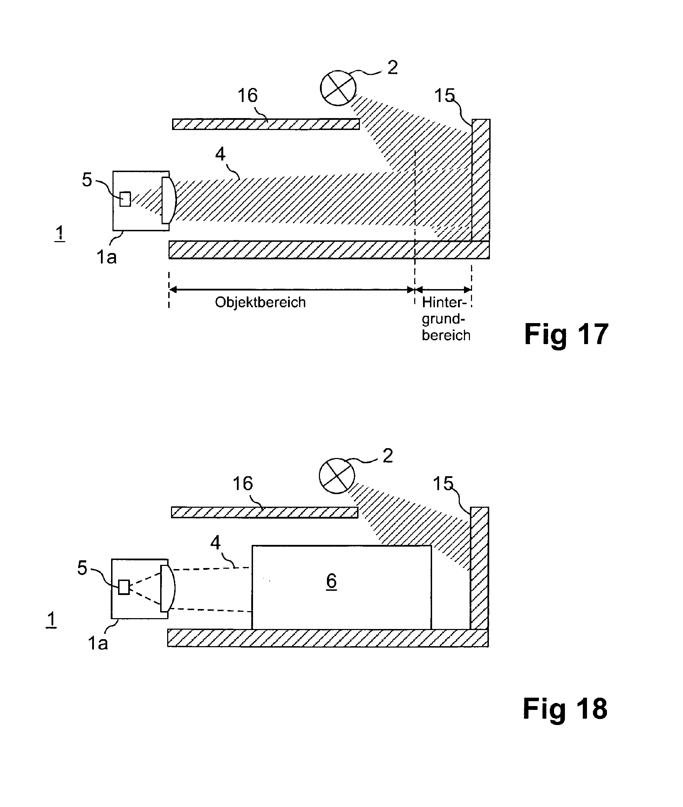

Figur 17 zeigt ein sechstes Ausführungsbeispiel eines als Raumlicht-Referenz-Hintergrundtaster ausgebildeten optischen Sensors 1, bei dem eine diffus reflektierende Hintergrundfläche 15 die Lichtumlenkeinheit 3 ersetzt.

Figur 18 zeigt die Anordnung nach Figur 17 mit eingetauchtem Objekt 6, das die Empfangslichtstrahlen 4 unterbricht. Die Abdeckung 16 verhindert, dass das Licht der Raumlichtquelle 2 direkt auf die dem optischen Sensor 1 zugewandte Seite des Objektes 6 fällt.

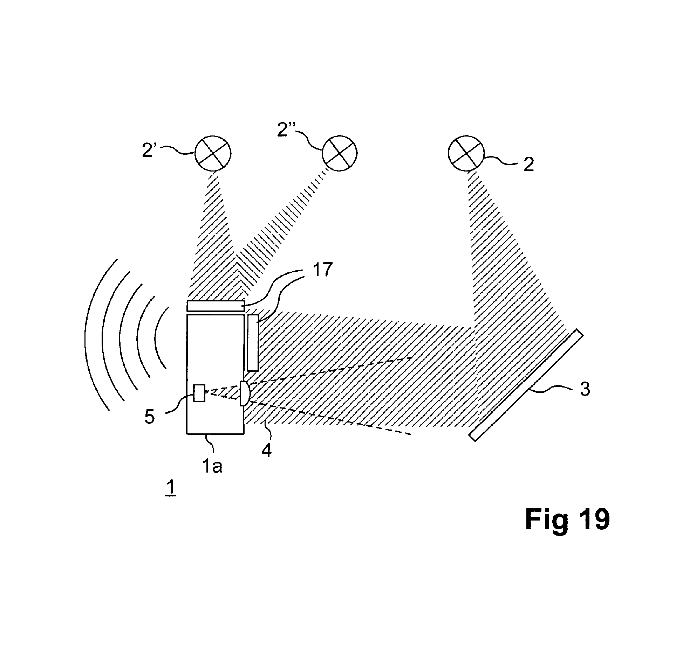

Figur 19 zeigt das Ausführungsbeispiel des optischen Sensors 1 nach Figur 10, wobei am optischen Sensor 1 Solarelemente 17 angeordnet sind, die Licht von der Raumlichtquelle 2 über den Umlenkspiegel 3, oder direkt von den Lichtquellen 2', 2" aufnehmen und daraus die Spannungsversorgung des optischen Sensors 1 liefern. Das Schaltsignal wird als kurzes Funksignal abgegeben. Damit ist der optische Sensor 1 autark und kann an Stellen eingesetzt werden, die für eine Verdrahtung unzugänglich oder zu aufwändig wären.

### Bezugszeichenliste

- (1): Optischer Sensor
- (1a): Gehäuse
- (2): Raumlichtquelle
- (3): Lichtumlenkeinheit
- (4): Empfangslichtstrahlen
- (5): Empfänger
- (5a): Empfänger
- (5b): Empfänger
- (6): Objekt
- (7): Empfangsverstärker
- (8): Auswerteeinheit
- (9): Schaltausgang
- (10): Empfangsoptik
- (11): Empfangsöffnungswinkel
- (12): Polarisationsfilter
- (13): Polarisationsfilter
- (14): Polarisationsfilter
- (15): Hintergrundfläche
- (16): Abdeckung
- (17): Solarelemente

## Patentansprüche

1. Optischer Sensor (1) zur Erfassung von Objekten (6) in einem Überwachungsbereich, mit einem Lichtstrahlen empfangenden Empfänger (5) und einer Auswerteeinheit (8), in welcher in Abhängigkeit der Empfangssignale am Ausgang des Empfängers (5) ein Objektfeststellungssignal generiert wird, **dadurch gekennzeichnet, dass** von einer nicht zum optischen Sensor (1) gehörenden, einen Raum beleuchtenden Raumlichtquelle (2) emittiertes Wechsellicht auf den Empfänger (5) geführt wird, und dass in Abhängigkeit der Menge des am Empfänger (5) registrierten Wechsellichts das Objektfeststellungssignal generiert wird.

2. Optischer Sensor (1) nach Anspruch 1, **dadurch gekennzeichnet, dass** das Wechsellicht der Raumlichtquelle (2) direkt oder über Umlenkmittel zum Empfänger (5) geführt ist.

3. Optischer Sensor (1) nach einem der Ansprüche 1 oder 2, **dadurch gekennzeichnet, dass** dieser nach dem Lichtschrankenprinzip arbeitet.

4. Optischer Sensor (1) nach einem der Ansprüche 1 oder 2, **dadurch gekennzeichnet, dass** dieser nach dem Lichttasterprinzip arbeitet.

5. Optischer Sensor (1) nach einem der Ansprüche 1 bis 4, **dadurch gekennzeichnet, dass** das Empfangssignal im Zeitbereich mit einer Abtastfrequenz abgetastet wird.

6. Optischer Sensor (1) nach Anspruch 5, **dadurch gekennzeichnet, dass** die Abtastung des Empfangssignals mit einem Analog-Digital-Wandler erfolgt.

7. Optischer Sensor (1) nach einem der Ansprüche 5 oder 6, **dadurch gekennzeichnet, dass** die Abtastfrequenz von der Frequenz des Wechsellichts verschieden ist.

8. Optischer Sensor (1) nach einem der Ansprüche 5 oder 6, **dadurch gekennzeichnet, dass** bei einer dicht an der Abtastfrequenz liegenden Frequenz des Wechsellichts die Abtastfrequenz variiert wird.

9. Optischer Sensor (1) nach einem der Ansprüche 5 bis 8, **dadurch gekennzeichnet, dass** das mit der Abtastfrequenz abgetastete Empfangssignal über ein bestimmtes Zeitintervall aufsummiert wird, und dass das aufsummierte Empfangssignal zur Generierung des Objektfeststellungssignals mit einem Schwellwert bewertet wird.

10. Optischer Sensor (1) nach einem der Ansprüche 1 bis 9, **dadurch gekennzeichnet, dass** mittels eines Empfangsverstärkers (7) auf dem Empfänger (5) auftreffende Störlichtanteile in Form von Gleichlicht ausgefiltert werden.
